# EUROPÄISCHE PATENTSCHRIFT

(11) **EP 2 920 061 B1**
(45) Veröffentlichungstag und Bekanntmachung des Hinweises auf die Patenterteilung: **22.08.2018**
(21) Anmeldenummer: 13798927.3
(22) Anmeldetag: 11.11.2013
(51) Int. Cl.: B63H 20/12, B63H 21/36, H01H 47/00, H01M 2/12, H01M 10/0525, B63H 23/24, B63J 3/04, B63H 21/17, B63H 20/00

(54) **BOOT MIT ELEKTROANTRIEB UND NOTAUSSCHALTER**
BOAT WITH ELECTRIC DRIVE AND EMERGENCY OFF SWITCH
BATEAU POURVU D'UN ENTRAÎNEMENT ÉLECTRIQUE ET D'UN INTERRUPTEUR D'ARRÊT D'URGENCE

(30) Priorität: 12.11.2012 DE 102012021996
(43) Veröffentlichungstag der Anmeldung: 23.09.2015
(73) Patentinhaber: Torqeedo GmbH, 82205 Gilching (DE)
(72) Erfinder: BIEBACH, Jens, 82327 Tutzing (DE); KRIEGER, Philipp, 82340 Feldafing (DE); HARTMEYER, Marc, 81829München (DE)
(74) Vertreter: Nordmeyer, Philipp Werner
(86) Internationale Anmeldenummer: PCT/EP2013/003393
(87) Internationale Veröffentlichungsnummer: WO 2014/072072

(56) Entgegenhaltungen:
- DE-A1-102004 045 897
- US-A1- 2011 244 739

## Beschreibung

Die Erfindung betrifft ein Boot mit einem Elektroantrieb und einem elektrischen Speicher, der mindestens ein Speicherelement und einen positiven und einen negativen Pol aufweist, wobei die Pole in stromleitender Verbindung mit dem Speicherelement stehen und wobei ein Trennmittel zum Trennen der stromleitenden Verbindung zwischen mindestens einem der Pole und dem Speicherelement vorgesehen sind. Ferner bezieht sich die Erfindung auf ein Verfahren zum Trennen eines elektrischen Verbrauchers von einem elektrischen Speicher, wobei der elektrische Speicher mindestens ein Speicherelement und einen positiven und einen negativen Pol aufweist und wobei die Pole in stromleitender Verbindung mit dem Speicherelement stehen und der elektrische Verbraucher an die Pole angeschlossen ist.

Im Gefahrenfall oder zur Abwendung einer Gefahr ist es manchmal notwendig, die auf einem Boot befindlichen elektrischen Komponenten und elektrischen Verbraucher schnell und zuverlässig abzuschalten. Dies ist insbesondere dann der Fall, wenn die elektrischen Komponenten an eine Hochvolt-Spannungsquelle angeschlossen sind. Dies gilt insbesondere für elektrische Verbraucher auf einem Boot. Dokument US 2011/0244739 A1 wird als nächstliegender Stand der Technik betrachtet und offenbart den Oberbegriff des Anspruchs 1. Aufgabe vorliegender Erfindung ist es daher, einen auf einem Boot befindlichen elektrischen Verbraucher schnell und zuverlässig von der Spannungsquelle zu trennen. Diese Aufgabe wird durch ein Boot mit einem Elektroantrieb und einem elektrischen Speicher gelöst, wobei der elektrische Speicher mindestens ein Speicherelement und einen positiven und einen negativen Pol aufweist, wobei die Pole in stromleitender Verbindung mit dem Speicherelement stehen und wobei ein Trennmittel zum Trennen der stromleitenden Verbindung zwischen mindestens einem der Pole und dem Speicherelement vorgesehen sind, und welches dadurch gekennzeichnet ist, dass ein von dem Benutzer des Bootes unmittelbar aktivierbarer Notausschalter vorgesehen ist, welcher mit dem Trennmittel in Wirkverbindung steht.

Ein erfindungsgemäßes Verfahren der eingangs genannten Art zeichnet sich dadurch aus, dass die stromleitende Verbindung zwischen dem Speicherelement und mindestens einem der Pole mittels eines Notausschalters unterbrochen wird.

Durch Betätigen des Notausschalters wird die stromleitende Verbindung zwischen den Polen und dem Speicherelement von dem Benutzer des Bootes unmittelbar getrennt. Auf diese Weise werden alle an die Pole angeschlossenen elektrischen Verbraucher schnell und zuverlässig abgeschaltet. Dies ist insbesondere für elektrische Verbraucher auf einem Boot wichtig, da dort aufgrund der nassen Umgebung und der stets feuchten Verhältnisse besondere Gefährdungsbedingungen herrschen.

Erfindungsgemäß wirkt der Notausschalter direkt auf den elektrischen Speicher und schaltet die Pole des Speichers spannungsfrei. Damit werden sofort alle an den elektrischen Speicher angeschlossenen elektrischen Komponenten von der Spannungsversorgung abgeschnitten. In einer Ausführungsform wird das Trennmittel elektrisch betätigt. Bei Aktivierung des Notausschalters wird die elektrische Versorgung des Trennmittels unterbrochen, so dass das Trennmittel die Pole des elektrischen Speichers von dem oder den Speicherelementen trennt.

Die Erfindung ist besonders vorteilhaft, wenn der elektrische Speicher als Hochvoltspannungsquelle ausgeführt ist. Mit dem Begriff Hochvoltspannungsquelle sollen insbesondere Spannungsquellen mit einer Klemmenspannung von mehr als 60 Volt, mehr als 100 Volt oder mehr als 200 Volt bezeichnet werden.

Der Notausschalter ist vorzugsweise so in oder an dem Boot angebracht, dass er von dem Benutzer im Gefahrenfall sofort betätigt werden kann. Bei einem Außenbordantrieb ist es insbesondere von Vorteil, den Notausschalter am Gehäuse des Außenbordantriebs oder an der Pinne des Außenbordantriebs vorzusehen. Wenn der Benutzer den Außenbordantrieb über die Pinne steuert, befindet er sich immer in unmittelbarer Nähe des Notausschalters und kann so im Bedarfsfall den Notausschalter sehr schnell betätigen. Alternativ kann der Notausschalter auch in einer Fernsteuerung untergebracht oder mit einer Fernsteuerung versehen sein.

Während der Lebensdauer des elektrischen Antriebes kann eine wiederholte Betätigung des Notausschalters notwendig sein. Der Notausschalter und das Trennmittel müssen daher auch für den Fall wiederholter Betätigung einwandfrei funktionieren.

Das Schalten eines elektrischen Trennmittels unter Last stellt eine erhöhte Belastung dar und das Trennmittel muss entsprechend ausgelegt werden. Die Baugröße des Trennmittels und die Kosten vergrößern sich, wenn ein wiederholtes Abschalten unter Last gefordert wird.

Aus diesem Grund ist es vorteilhaft, wenn zuerst die Last reduziert und dann das Trennmittel geöffnet wird. Von Vorteil sind daher für einen oder mehrere der elektrischen Verbraucher Trennelemente zum Trennen der stromleitenden Verbindung zwischen dem jeweiligen Verbraucher und mindestens einem der Pole vorgesehen. Diese Trennelemente zum Trennen der stromleitenden Verbindung zwischen dem jeweiligen Verbraucher und mindestens einem der Pole stehen in Wirkverbindung mit dem Notausschalter.

Das Trennmittel für das Unterbrechen der stromleitenden Verbindung zwischen dem Speicherelement und mindestens einem der Pole und das oder die Trennelemente zum Trennen der stromleitenden Verbindung zwischen dem jeweiligen Verbraucher und mindestens einem der Pole werden daher zeitlich gestaffelt betätigt, um zunächst die Last zu reduzieren, bevor das Trennmittel den oder die Pole spannungsfrei schaltet.

Dies kann beispielsweise durch eine zeitlich gestaffelte Ansteuerung der Signalempfänger durch eine Notausteuerung geschehen. Das heißt, bei Betätigung des Notausschalters werden zeitlich versetzt Signale an die Trennelemente und das Trennmittel übermittelt, so dass die Trennelemente und das Trennmittel zu unterschiedlichen Zeitpunkten geschaltet werden.

In einer anderen Ausführungsform erhalten das Trennmittel und die Trennelemente im Wesentlichen gleichzeitig ein Signal von dem Notausschalter. Die Trennelemente und das Trennmittel verfügen über oder sind in Verbindung mit Steuereinheiten, die jeweils über eine interne Verzögerung verfügen, die ein Umsetzen der Schaltbefehle in der gewünschten Reihenfolge realisieren.

Sofern ein an die Pole des elektrischen Speichers angeschlossener elektrischer Verbraucher über eine elektronische Steuerung verfügt, ist es ebenso möglich, bei Aktivierung des Notausschalters direkt auf die elektronische Steuerung des Verbrauchers einzuwirken und den Verbraucher auszuschalten.

Die Verwendung der oben beschriebenen zeitlichen Verzögerung bei Aktivierung des Notausschalters kann die Zuverlässigkeit des Notauskreises reduzieren. Aus Sicherheitsgründen ist es daher vorteilhaft, den Notausschalter zusätzlich in Wirkverbindung mit der Spannungsversorgung der Steuereinheiten der elektrischen Verbraucher und/oder des Trennmittels und/oder der Trennelemente zu bringen, soweit diese Steuereinheiten und Spannungsversorgungen versehen sind. Nach dem Betätigen des Notausschalters werden nicht nur das Trennmittel zur Unterbrechung der stromleitenden Verbindung zwischen dem Speicherelement und mindestens einem der Pole und gegebenenfalls die Trennelemente zur Unterbrechung der elektrischen Verbindung zwischen dem Verbraucher und den Polen aktiviert, sondern zusätzlich noch die Steuereinheiten der Verbraucher, der Trennelemente und/oder des Trennmittels spannungsfrei geschaltet.

In einer Variante obiger Ausführungsform werden nach dem Betätigen des Notausschalters zuerst die Trennelemente und das Trennmittel geschaltet und die jeweiligen stromleitenden Verbindungen getrennt, bevor die Steuereinheiten der Verbraucher, der Trennelemente und/oder des Trennmittels von deren Spannungsversorgungen getrennt werden.

Das Unterbrechen der Spannungsversorgung der Steuereinheiten wird gegenüber der gesteuerten Abschaltung, d.h. der Aktivierung der Trennelemente und/oder des Trennmittels, zeitlich etwas verzögert. Die zeitliche Verzögerung wird von Vorteil durch die Verwendung eines weiteren Speicherelementes für die Bereitstellung der Versorgungsspannung sichergestellt, wobei das weitere Speicherelement einen definierten Energieinhalt besitzt. Dieses weitere Speicherelement kann zum Beispiel durch Kondensatoren oder Batterien mit definiertem Energieinhalt gebildet werden. Nach dem Verbrauchen dieser Energie werden auch die Steuereinheiten von der Spannungsquelle getrennt, so dass die Verbrauchersicher abgeschaltet sind.

Durch die beschriebene zeitliche Staffelung des Schaltens der Trennelemente, des Trennmittels und / oder der Spannungsversorgungen der Steuereinheiten der Verbraucher, der Trennelemente und/oder des Trennmittels wird die Beanspruchung der elektrischen Speicher, der Verbraucher sowie der Trennelemente und des Trennmittels minimiert. Die Verzögerung zwischen dem Schalten der Trennelemente, dem Öffnen des Trennmittels und dem Abschalten der Versorgungsspannung der Trennmittel bzw. der Verbraucher kann zum Beispiel kleiner als 100ms sein.

Die zeitliche Verzögerung der Unterbrechung der elektrischen Versorgung der Steuereinheiten der Verbraucher bzw. der Versorgung der Steuereinheit der Trennmittel wird beispielsweise durch einen Steuerungsspeicher mit definiertem Energieinhalt, wie etwa einen Kondensator oder eine Batterie, realisiert.

Der Notausschalter ist vorzugsweise als Magnetschalter mit magnetischer Wirkungsweise ausgeführt. Dies gilt insbesondere für ein Boot mit einem Außenbordantrieb. Der Außenbordantrieb ist üblicherweise mit einem wasserdichten Gehäuse ausgeführt. Durch die Verwendung eines Magnetschalters wird eine Leitungsdurchführung vom Notausschalter, der außerhalb des Gehäuses des Außenbordantriebs angebracht ist, in das Innere des Gehäuses vermieden. Die Wasserdichtigkeit des Gehäuses bleibt gewährleistet und wird durch den Notausschalter nicht negativ beeinflusst.

Zum Beispiel ist im Gehäuse des Außenbordantriebs eine Steuereinheit vorgesehen, welche auf ein magnetisches Feld reagiert, das durch Betätigung des Notausschalters beeinflusst oder gestört wird. Die Steuereinheit steht dann in Wirkverbindung mit dem Trennmittel und gegebenenfalls mit weiteren Trennelementen oder anderen Steuereinheiten.

Der Notausschalter ist hierzu beispielsweise mit einem Permanentmagneten versehen. Beim Betätigen des Notausschalters wird der Permanentmagnet auf eine dafür vorgesehene Stelle des Gehäuses des Außenbordantriebs gesetzt. Eine Sensoreinheit innerhalb des Gehäuses, insbesondere innerhalb eines wasserdichten Gehäuses, erkennt dann, dass der Notausschalter aktiviert wurde. Die Sensoreinheit kann beispielsweise ein Bauelement aus einem weichmagnetischen Werkstoff umfassen, welches beim Aktivieren des Notausschalters und Aufsetzen des Permanentmagneten von dem Permanentmagneten angezogen wird. Umgekehrt ist es auch möglich, dass sich der Permanentmagnet innerhalb des wasserdichten Gehäuses befindet und das weichmagnetische Bauteil ein Element des Notausschalters bildet.

In einer weiteren Variante wird durch Betätigung des Notausschalters ein Magnetfeld hervorgerufen, welches auf eine Steuereinheit einwirkt. Diese Änderungen des Magnetfelds oder die Bildung eines Magnetfelds werden von der Steuereinheit festgestellt, als Signal zur Notabschaltung interpretiert und an das Trennmittel und/oder die Trennelemente weitergeleitet, welche dann die stromleitende Verbindung zwischen dem Speicherelement des elektrischen Speichers und den Polen und/oder zwischen dem Verbraucher und den Polen unterbrechen.

In einer anderen Ausführungsform der Erfindung wird bei Betätigung des Notausschalters ein magnetischer Kreis beeinflusst. Beispielsweise wird im Inneren des Gehäuses eines Außenbordantriebs im Normalbetrieb ein magnetischer Kreis aufrechterhalten. Bei Betätigung des Notausschalters wird ein Magnet von außen in die Nähe des magnetischen Kreises gebracht und die Veränderung des magnetischen Kreises, die sich aus der Veränderung der Position des Magneten ergibt, kann durch einen Magnetfeldsensor, ein Hallelement oder einen Reedkontakt detektiert werden.

Die Zuverlässigkeit der Erkennung eines bestimmten Zustandes des für die Notausfunktion verwendeten Magnetkreises kann durch die Verwendung mehrerer Magnetfeldsensoren, Hallelemente oder auch Reedkontakte gesteigert werden. In diesem Falle ist die Aktivierung aller Magnetfeldsensoren oder aller Reedkontakte notwendig, um die Pole stromleitend mit dem Speicherelement zu verbinden. Umgekehrt bedeutet das, dass die Deaktivierung eines Sensors oder eines Kontakts ausreicht, um die stromleitende Verbindung zwischen dem Speicherelement und den Polen zu unterbrechen und in den Notauszustand zu schalten.

Die Signale der Sensoren werden logisch so verknüpft, dass das Trennmittel des Speichers nur dann eine stromleitende Verbinudng zwischen dem Speicherelement und den Polen herstellt, wenn alle Sensoren einen ordnungsgemäßen Zustand, d.h. die Nicht-Aktivierung des Notausschalters, erkennen. Sobald einer der Sensoren eine Betätigung des Notausschalters erkennt, wird das Trennmittel angesteuert und die stromleitende Verbindung unterbrochen.

Bei einem Außenbordantrieb dient die Pinne dazu, Richtung und Geschwindigkeit des Schubs zu steuern und bestimmte Sollwerte an die Steuereinheit des Motors zu übermitteln. Die Steuereinheit leitet dann entsprechende Steuersignale an den Elektroantrieb bzw. Elektromotor weiter, um diesen beispielsweise langsamer oder schneller drehen zu lassen.

Bei einem Außenbordantrieb mit einem Elektromotor, einer Pinne und einer Steuereinheit besteht die Gefahr, dass über die Verbindung zwischen der Pinne und der Steuereinheit Wasser oder Feuchtigkeit in die Steuereinheit eintritt und die empfindliche Elektronik stört. Vorzugsweise erfolgt bei einem solchen Außenbordantrieb die Kopplung von Pinne und Steuereinheit hinsichtlich der zwischen den beiden übertragenen Signale magnetisch.

Die Pinne ist beispielsweise mit einem Magneten ausgerüstet, welcher in seiner Position veränderlich ist. Diese Positionsveränderung kann beispielsweise dadurch erfolgen, dass der Magnet in einen Drehgriff integriert wird. Die Steuereinheit zur Steuerung des Motors steht in Wirkverbindung mit einem Sensor zur Detektierung des Magnetfelds des Magneten und damit zur Bestimmung der Position oder Lage des Magneten. Die Steuereinheit interpretiert die Position des Magneten als einen bestimmten Sollwert für die Steuerung des Motors und sendet entsprechende Signale an den Elektromotor. Zusätzlich dient der Magnet zur Aktivierung der Notausfunktion. Wird der Magnet aus seiner Position entfernt, wird dies von dem Sensor detektiert, an die Steuereinheit weitergeleitet und als Signal zum Einleiten des Notaus interpretiert, d.h. die stromleitende Verbindung zwischen dem Speicherelement und mindestens einem der Pole wird unterbrochen.

Die Erfindung sowie weitere vorteilhafte Ausgestaltungen der Erfindung sind in den Zeichnungen schematisch dargestellt. Hierbei zeigen
- Figur 1: schematisch eine erfindungsgemäße Schaltung,
- Figuren 2 bis 4: alternative Ausführungsformen der Erfindung,
- Figuren 5 und 6: Varianten der Erfindung, bei denen die Notausfunktion magnetisch aktiviert wird,
- Figur 7: eine Variante, bei der die Notausfunktion über die Pinne eines Außenbordantriebs aktiviert werden kann.

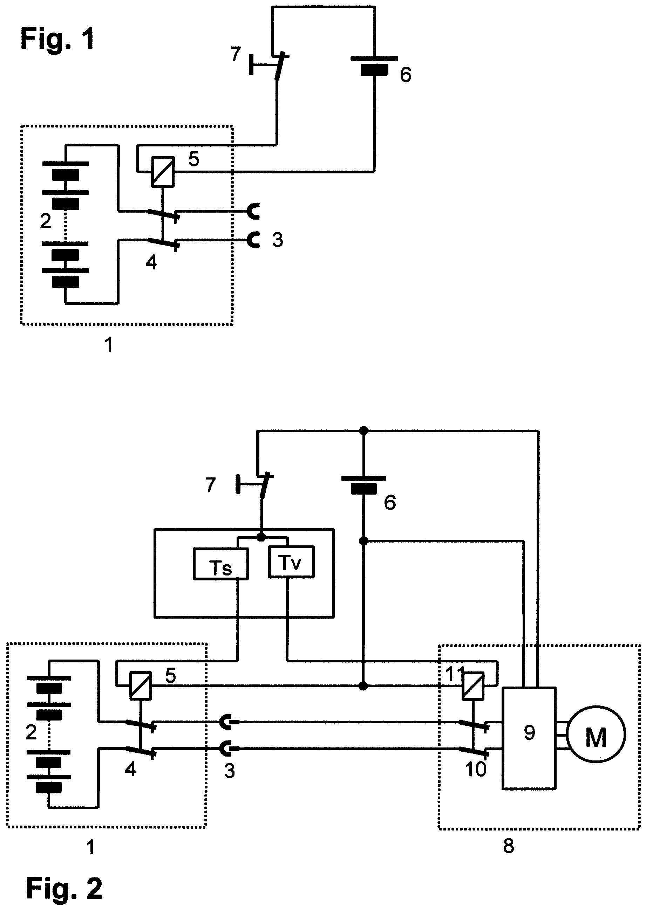

In Figur 1 ist schematisch eine Lithium-Ionen-Batterie 1 mit einer erfindungsgemäßen Notausschaltung dargestellt. Die Lithium-Ionen-Batterie 1 dient beispielsweise auf einem Boot als elektrischer Speicher zur Spannungsversorgung eines nicht dargestellten Elektromotors zum Antreiben des Bootes und ist als Hochvolt-Batterie ausgeführt.

Die Lithium-Ionen-Batterie 1 besitzt eine Vielzahl von Batteriezellen 2 oder allgemein Speicherelementen 2, die in Reihe und/oder parallel zueinander geschaltet sind. Die Batteriezellen 2 sind an zwei Batteriepole 3 angeschlossen, an welche der oder die elektrischen Verbraucher, beispielsweise der Elektroantrieb des Bootes, angeschlossen werden können.

Zwischen den Batteriezellen 2 und den Batteriepolen 3 sind Schalter 4 vorgesehen, mit denen die stromleitende Verbindung zwischen den Batteriezellen 2 und den Batteriepolen 3 hergestellt oder unterbrochen werden kann. Die Schalter 4 werden über ein Relais 5 angesteuert. Das Relais 5 wird aus einer Niedervolt-Batterie 6 mit einer Klemmenspannung von beispielsweise 12 V mit Strom versorgt. In den die Batterie 6 und das Relais 5 enthaltenden Stromkreis ist ein Notausschalter 7 geschaltet.

Solange das Relais 5 aus der Batterie 6 mit Strom versorgt wird, bleiben die Schalter 4 geschlossen und die Batteriepole 3 sind mit den Batteriezellen 2 verbunden. Wird in einem Notfall der Notausschalter 7 von einem Benutzer des Bootes betätigt, so wird der die Batterie 6 und das Relais 5 enthaltende Stromkreis unterbrochen und das Relais 5 von der Batterie 6 getrennt. Dies hat zur Folge, dass die Schalter 4 automatisch öffnen und die Batteriepole 2 spannungsfrei schalten. Damit werden auch alle an die Batteriepole 3 angeschlossenen Verbraucher abgeschaltet.

In Figur 2 ist eine andere Ausführungsform der Erfindung gezeigt. Gleiche Bauelemente sind in allen Figuren mit den gleichen Bezugszeichen versehen.

Die Batteriepole 3 können wiederum mittels der Schalter 4 von den Batteriezellen 2 getrennt werden. Die Schalter 4 werden über das Relais 5 angesteuert. In dem Stromkreis aus der Niedervolt-Batterie 6, Notausschalter 7 und Relais 5 ist nunmehr eine zentrale Notaus-Steuereinheit 22 mit einem Zeitverzögerungsglied Ts und einem Zeitverzögerungsglied Tv vorgesehen. Das Zeitverzögerungsglied Ts unterbricht beim Betätigen des Notausschalters 7 den Stromfluss oder die Spannungsversorgung des Relais 5 mit einer geringen Verzögerung von beispielsweise 100 ms gegenüber der Unterbrechung der Spannungsversorgung des Relais 11. Die Zeitverzögerungsglieder Ts und Tv sind beispielsweise als Kapazitäten ausgeführt.

An die Batteriepole 3 ist ein Elektroantrieb 8 angeschlossen. Der Elektroantrieb 8 umfasst einen Elektromotor M und eine Motorsteuerung 9. Die Motorsteuerung 9 wird aus der Niedervolt-Batterie 6 versorgt. Die Stromversorgung des Elektromotors M erfolgt aus der Lithium-Ionen-Batterie 1 und kann mittels Schalter 10 in den Verbindungsleitungen zwischen den Batteriepolen 3 und dem Elektromotor M unterbrochen werden. Die Schalter 10 werden über ein Relais 11 geschaltet.

Das Relais 11 ist in Serie mit der Niedervolt-Batterie 6 dem Notausschalter 7 und dem Zeitverzögerungsglied Tv geschaltet. Das Zeitverzögerungsglied Tv unterbricht beim Betätigen des Notausschalters 7 den Stromfluss oder die Spannungsversorgung des Relais 11 mit einer einstellbaren Zeitverzögerung.

Beim Öffnen des Notausschalters 7 werden das Relais 5 und das Relais 11 mit den über das Zeitverzögerungsglied Ts und das Zeitverzögerungsglied Tv einstellbaren Zeitverzögerungen von der Niedervolt-Batterie 6 getrennt. Vorzugsweise werden die Zeitverzögerungen der Zeitverzögerungsglieder Ts und Tv so eingestellt, dass nach dem Öffnen des Notausschalters 7 zunächst das Relais 11 von der Spannungsversorgung 6 getrennt und der Schalter 10 geöffnet wird. Anschließend wird das Relais 5 spannungsfrei geschaltet, so dass auch die Schalter 4 öffnen und die Batteriepole 3 von den Batteriezellen 2 elektrisch getrennt sind.

Bei der Ausführungsform nach Figur 2 werden zunächst die einzelnen Verbraucher, in diesem Fall der Elektromotor M, von den Batteriepolen 3 getrennt, bevor die Batteriepole 3 von den Batteriezellen 2 getrennt werden. Auf diese Weise wird die Belastung der Schalter 4 zur Trennung der Batteriepole 3 von den Batteriezellen 2 reduziert.

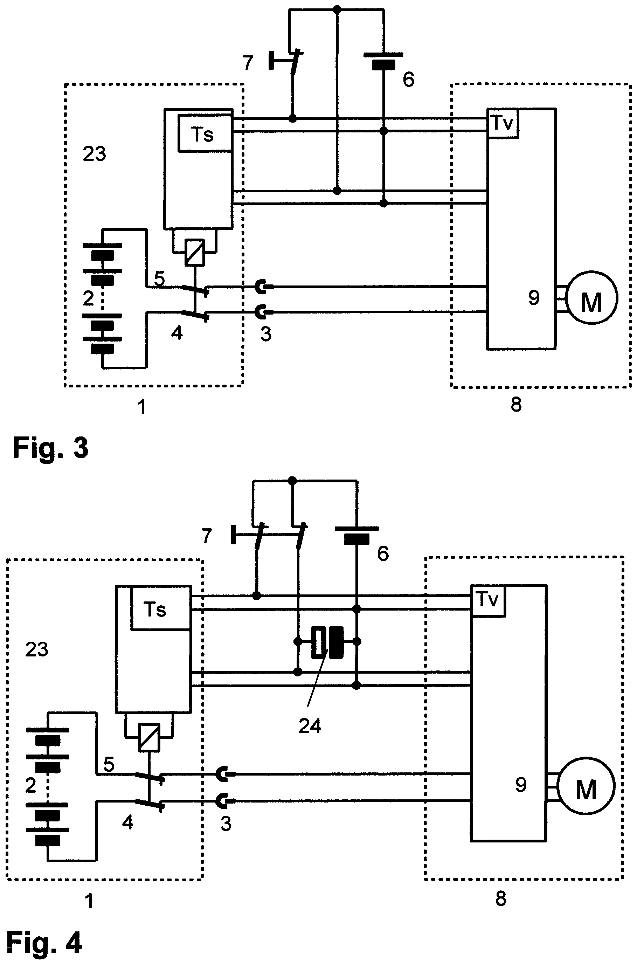

In Figur 3 ist eine weitere Ausführungsform der Erfindung gezeigt. Im Unterschied zu der Ausführungsform nach Figur 2 ist in diesem Fall keine zentrale Notaus-Steuereinheit vorgesehen, sondern separate Steuereinheiten 23, 9 für die Lithium-Ionen-Batterie 1 bzw. den Elektromotor M. Die Steuereinheit 23 für die Lithium-Ionen-Batterie 1 ist mit einem Zeitverzögerungsglied Ts versehen, die Motorsteuerung 9 weist ein Zeitverzögerungsglied Tv auf. Nach Betätigung des Notausschalters 7 wird gleichzeitig der Stromfluss zu dem Zeitverzögerungsglied Ts und zu dem Zeitverzögerungsglied Tv unterbrochen. Die Steuereinheit 23 und die Motorsteuerung 9 sind jedoch weiterhin mit der Niedervolt-Batterie 6 verbunden.

Die Betätigung des Notausschalters 7 aktiviert die Zeitverzögerungsglieder Ts und Tv, welche daraufhin mit den eingestellten oder vorgesehenen Zeitkonstanten auf die Steuereinheit 23 bzw. die Motorsteuerung 9 wirken. Die zeitliche Verzögerung zwischen dem Ausschalten des Elektromotors M und dem Öffnen der Schalter 4 erfolgt damit dezentral durch die Zeitverzögerungsglieder Ts bzw. Tv in der Steuereinheit 23 bzw. in der Motorsteuerung 9. Die Zeitkonstante des Zeitverzögerungsglieds Tv ist kleiner als die des Zeitverzögerungsglieds Ts, so dass zunächst der Elektromotor M über die Motorsteuerung 9 abgeschaltet und danach über das Relais 5 die Schalter 4 geöffnet und die Batteriepole 3 von den Batteriezellen 2 getrennt werden.

In Figur 4 ist eine Variante der Ausführungsform von Figur 3 gezeigt, welche ein zusätzliches Sicherheitsmerkmal beinhaltet. In diesem Fall ist in der Stromversorgung für die Steuereinheit 23 und für die Motorsteuerung 9 ein Kondensator 24 als Energiepuffer vorgesehen. Wie bei der Ausführung nach Figur 3 werden bei Betätigung des Notausschalters 7 die Zeitverzögerungsglieder Ts und Tv von der Niedervolt-Batterie 6 getrennt und mit den entsprechenden Zeitverzögerungen werden der Elektromotor M abgeschaltet und die Schalter 4 geöffnet, um die Batteriepole 3 von den Batteriezellen 2 zu trennen.

Im Gegensatz zu Figur 3 werden bei Betätigung des Notausschalters 7 auch die Steuereinheit 23 und die Motorsteuerung 9 von der Niedervolt-Batterie 6 getrennt. Die Steuereinheit 23 und die Motorsteuerung 9 sind aber noch mit dem Kondensator 24 verbunden. Der Kondensator 24 stellt die Stromversorgung der Motorsteuerung 9 und der Steuereinheit 23 solange sicher, dass der Elektromotor M abgeschaltet und die Schalter 4 geöffnet werden. Nachdem der Kondensator 24 entladen ist, sind auch die Steuereinheit 23 und die Motorsteuerung 9 spannungsfrei.

In der Ausführungsform nach Figur 4 wird damit sichergestellt, dass selbst in dem unwahrscheinlichen Fall, dass die Steuereinheit 23 oder die Motorsteuerung 9 bei Aktivierung des Notausschalters 7 nicht ordnungsgemäß funktionieren, die Steuereinheit 23 und die Motorsteuerung 9 nach Entladung des Kondensators 24 spannungsfrei sind und entsprechend der Elektromotor M abgeschaltet und die Batteriepole 3 von den Batteriezellen 2 getrennt werden.

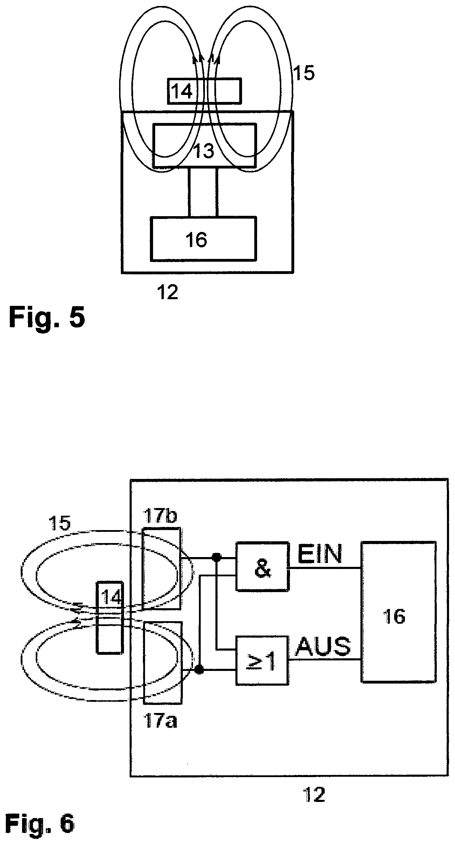

In Figur 5 ist eine weitere Variante der Erfindung gezeigt, die beispielsweise bei einem elektrischen Außenbordantrieb eines Bootes eingesetzt werden kann. In diesem Beispiel ist im Gehäuse 12 des Außenbordantriebs eine Steuereinheit 13 vorgesehen, welche auf ein magnetisches Feld reagiert, das durch Betätigung des Notausschalters beeinflusst oder gestört wird. Bei Betätigung des Notausschalters wird ein Magnet 14 in die Nähe der Steuereinheit 13 gebracht. Das magnetische Feld 15 des Magneten 14 stört die Steuereinheit 13 und signalisiert dieser, dass über eine Notaussteuerung 16 die Schalter 4 zur Unterbrechung der elektrischen Verbindung zwischen den Batteriezellen 2 und den Batteriepolen 3 geöffnet werden sollen. Selbstverständlich kann diese Ausführungsform mit jedem der Ausführungsbeispiele nach den Figuren 1 bis 4 kombiniert werden.

Es ist auch möglich, durch Betätigung des Notausschalters ein Magnetfeld hervorzurufen. Diese Änderungen oder Bildung eines Magnetfelds wird von der Steuereinheit festgestellt, als Signal zur Notabschaltung interpretiert und an die Schalter 4 weitergeleitet, welche dann die stromleitende Verbindung zwischen die Batteriezellen 2 und den Batteriepolen 3 unterbrechen.

Figur 6 zeigt eine Variante der Ausführungsform von Figur 5. In diesem Fall sind zwei Sensoren 17a, 17b vorgesehen, welche die Anwesenheit des magnetischen Feldes 15 des Magneten 14 detektieren können. Die beiden Sensoren 17a, 17b sind logisch so verschaltet, dass nur dann wenn keiner der Sensoren 17a, 17b ein Magnetfeld registriert, die Notaussteuerung 16 deaktiviert wird. In diesem Fall bleiben die Schalter 4 geschlossen und die Batteriepole 3 sind mit den Batteriezellen 2 verbunden. Sobald einer oder beide der Sensoren 17a, 17b das Magnetfeld 15 detektieren, wird die Notaussteuerung aktiviert und die Batteriepole 3 werden spannungsfrei geschaltet.

Bei einem Außenbordantrieb dient die Pinne dazu, Richtung und Geschwindigkeit des Schubs zu steuern. Hierzu wird beispielsweise über einen an der Pinne befindlichen Gasgriff eine bestimmte Sollgeschwindigkeit oder ein bestimmter Schub vorgegeben. Dieser Sollwert wird an die Steuereinheit übermittelt und über Steuersignale an den Elektroantrieb bzw. Elektromotor weitergeleitet, um diesen beispielsweise langsamer oder schneller drehen zu lassen.

Bei einem Außenbordantrieb mit einem Elektromotor, einer Pinne und einer Steuereinheit besteht die Gefahr, dass über die Verbindung zwischen der Pinne und der Steuereinheit Wasser oder Feuchtigkeit in die Steuereinheit eintritt und die empfindliche Elektronik stört. Vorzugsweise erfolgt bei einem solchen Außenbordantrieb die Kopplung von Pinne und Steuereinheit hinsichtlich der zwischen den beiden übertragenen Signale magnetisch.

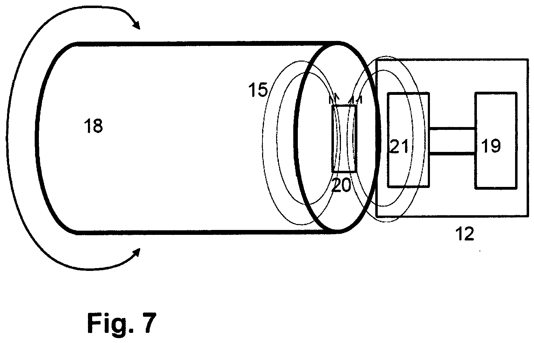

In Figur 7 ist eine solche Ausführungsform dargestellt. Die Steuereinheit 19 ist in einem Gehäuse 12 angeordnet und wasserdicht ausgeführt. Die Signalübertragung zwischen der Pinne 18 und der Steuereinheit 19 erfolgt elektromagnetisch, wodurch eine Leitungsdurchführung von der Pinne 18 zu der Steuereinheit 19 im Inneren des Gehäuses 12 vermieden wird. Die Wasserdichtigkeit des Gehäuses 12 bleibt also gewährleistet und wird durch die Verbindung von Pinne 18 und Steuereinheit 19 nicht negativ beeinflusst. Pinne und Steuereinheit sind hierzu zum Beispiel mit einem Magneten 20 und einem entsprechenden Empfänger 21 ausgerüstet, welche die Signalübertragung sicherstellen.

Der Magnet 20 hat eine Doppelfunktion: Der Magnet 20 dreht sich mit dem Drehgriff 18 der Pinne mit und überträgt dessen Position über den Sensor 21 auf die Steuereinheit 19. Sollgeschwindigkeit und Schub werden so über den Drehgriff 18 an die Steuereinheit 19 übermittelt. Außerdem wird durch Entfernen des Magneten 20 die Notausfunktion aktiviert. Der Notausschalter ist in diesem Fall so ausgeführt, dass bei dessen Betätigung der Magnet 20 aus seiner Position gegenüber dem Sensor 21 entfernt wird. Die Steuereinheit 19 interpretiert das Wegfallen oder Fehlen des Magnetfeldes 15 als Notaus-Situation und leitet die entsprechenden Schritte, insbesondere das Trennen der Batteriepole von den Batteriezellen, ein.

## Patentansprüche

1. Boot mit einem Elektroantrieb (M) und einem elektrischen Speicher (1), der mindestens ein Speicherelement (2) und einen positiven und einen negativen Pol (3) aufweist, wobei die Pole (3) in stromleitender Verbindung mit dem Speicherelement (2) stehen und wobei ein Trennmittel (4) zum Trennen der stromleitenden Verbindung zwischen mindestens einem der Pole (3) und dem Speicherelement (2) vorgesehen sind, **dadurch gekennzeichnet, dass** ein von dem Benutzer des Bootes unmittelbar aktivierbarer Notausschalter (7) vorgesehen ist, welcher mit dem Trennmittel (4) in Wirkverbindung steht.

2. Boot nach Anspruch 1, **dadurch gekennzeichnet, dass** der elektrische Speicher (1) als Hochvoltspannungsquelle mit einer Klemmenspannung von mehr als 60 Volt, mehr als 100 Volt oder mehr als 200 Volt ausgeführt ist.

3. Boot nach einem der vorhergehenden Ansprüche, **dadurch gekennzeichnet, dass** das Boot mit einem Außenbordantrieb versehen ist und dass der Notausschalter (7) am Gehäuse des Außenbordantriebs oder an der Pinne des Außenbordantriebs vorgesehen ist.

4. Boot nach einem der vorhergehenden Ansprüche, **dadurch gekennzeichnet, dass** ein oder mehrere elektrische Verbraucher (8) an die Pole (3) des elektrischen Speichers (1) angeschlossen sind und dass für einen oder mehrere der elektrischen Verbraucher (M) Trennelemente (10) zum Trennen der stromleitenden Verbindung zwischen dem jeweiligen Verbraucher (M) und mindestens einem der Pole (3) vorgesehen sind, wobei das oder die Trennelemente (10) zum Trennen der stromleitenden Verbindung zwischen dem jeweiligen Verbraucher (M) und mindestens einem der Pole (3) in Wirkverbindung mit dem Notausschalter (7) stehen.

5. Boot nach Anspruch 4, **dadurch gekennzeichnet, dass** das Trennelement (10) mit einer Zeitverzögerungseinheit versehen ist.

6. Boot nach einem der vorhergehenden Ansprüche, **dadurch gekennzeichnet, dass** ein elektrischer Verbraucher (8) an die Pole (3) des elektrischen Speichers (1) angeschlossen ist, wobei der Verbraucher (8) über eine eigene Steuereinheit (9) verfügt, und dass die Steuereinheit (9) des Verbrauchers (8) mit dem Notausschalter (7) in Wirkverbindung steht.

7. Boot nach einem der vorhergehenden Ansprüche, **dadurch gekennzeichnet, dass** ein elektrischer Verbraucher (8) an die Pole (3) des elektrischen Speichers (1) angeschlossen ist, wobei der Verbraucher (8) über eine eigene Steuereinheit (9) verfügt, welche an eine Spannungsversorgung (6) angeschlossen ist, und dass die Spannungsversorgung (6) der Steuereinheit (9) mit dem Notausschalter (7) in Wirkverbindung steht.

8. Boot nach einem der vorhergehenden Ansprüche, **dadurch gekennzeichnet, dass** der Notausschalter (7) als magnetischer Schalter ausgeführt ist.

9. Boot nach einem der vorhergehenden Ansprüche **dadurch gekennzeichnet, dass** mehrere Sensoren (17a, 17b) zur Erkennung der Betätigung des Notausschalters (7) vorgesehen sind.

10. Verfahren zum Trennen eines elektrischen Verbrauchers (8) von einem elektrischen Speicher (1) in einem Boot gemäß Anspruch 1, wobei der elektrische Speicher (1) mindestens ein Speicherelement (2) und einen positiven und einen negativen Pol (3) aufweist und wobei die Pole (3) in stromleitender Verbindung mit dem Speicherelement (2) stehen und der elektrische Verbraucher (8) an die Pole (3) angeschlossen ist, **dadurch gekennzeichnet, dass** die stromleitende Verbindung zwischen dem Speicherelement (2) und mindestens einem der Pole (3) mittels eines Notausschalters (7) unterbrochen wird.

11. Verfahren nach Anspruch 10, **dadurch gekennzeichnet, dass** ein Trennmittel (4) zum Trennen der stromleitenden Verbindung zwischen mindestens einem der Pole (3) und dem Speicherelement (2) vorgesehen sind, dass das Trennmittel (4) elektrisch betätigt wird und dass die Versorgungsspannung für die elektrische Betätigung des Trennmittels (4) durch den Notausschalter (7) geschaltet, insbesondere unterbrochen, wird.

12. Verfahren nach Anspruch 10 oder 11, **dadurch gekennzeichnet, dass** ein oder mehrere elektrische Verbraucher (8) an die Pole (3) des elektrischen Speichers (1) angeschlossen sind und dass bei Betätigung des Notausschalters (7) die elektrische Verbindung zwischen mindestens einem der Verbraucher (8) und mindestens einem der Pole (3) unterbrochen wird.

13. Verfahren nach einem der Ansprüche 10 bis 12, **dadurch gekennzeichnet, dass** zuerst die elektrische Verbindung zwischen mindestens einem der Verbraucher (8) und mindestens einem der Pole (3) unterbrochen wird und anschließend die stromleitende Verbindung zwischen dem Speicherelement (2) und mindestens einem der Pole (3) unterbrochen wird.

14. Verfahren nach einem der Ansprüche 12 oder 13, **dadurch gekennzeichnet, dass** ein Verbraucher (8) und/oder das Trennmittel (4) mit einer Steuereinheit (9, 23) verbunden sind, wobei die Steuereinheit(en) (9, 23) an eine Spannungsversorgung (6) angeschlossen sind, und dass bei Betätigung des Notausschalters (7) zuerst die stromleitende Verbindung zwischen dem Speicherelement (2) und mindestens einem der Pole (3) und gegebenenfalls die elektrische Verbindung zwischen mindestens einem der Verbraucher (8) und mindestens einem der Pole (3) unterbrochen wird und danach die Steuereinheit(en) (9, 23) von der Spannungsversorgung (6) getrennt werden.

15. Verfahren nach einem der Ansprüche 10 bis 14, **dadurch gekennzeichnet, dass** der Notausschalter (7) einen in seiner Position veränderlichen Magneten (20) und einen Sensor (21) zur Detektierung des Magnetfelds des Magneten (20) aufweist, und dass eine Motorsteuerung (19) vorgesehen ist, welche eine bestimmte Position des Magneten (20) mit einem bestimmten Sollwert für die Steuerung des Motors verknüpft und welche bei Entfernen des Magneten (20) aus seiner Position die stromleitende Verbindung zwischen dem Speicherelement (2) und mindestens einem der Pole (3) unterbricht.

## Claims

1. Boat with an electric drive (M) and an electrical storage device (1) which has at least one storage element (2) and a positive and a negative terminal (3), wherein the terminals (3) are in electrically conducting connection with the storage element (2) and wherein a separating means (4) for separating the electrically conducting connection between at least one of the terminals (3) and the storage element (2) is provided, **characterised in that** an emergency off-switch (7) which can be directly activated by the user of the boat is provided, which is in operational connection with the separating means (4).

2. Boat according to claim 1, **characterised in that** the electrical storage device (1) is in the form of a high-voltage source with a clamping voltage of more than 60 volts, more than 100 volts or more than 200 volts.

3. Boat according to any one of the preceding claims, **characterised in that** the boat is provided with an outboard drive and that the emergency off-switch (7) is provided on the housing of the outboard drive or at the tiller of the outboard drive.

4. Boat according to any one of the preceding claims, **characterised in that** one or more electrical loads (8) are connected to the terminals (3) of the electrical storage device (1) and that for one or more of the electrical loads (M) separating elements (10) for separating the electrically conducting connection between the respective load (M) and at least one of the terminals (3) are provided, wherein the separating element(s) (10) for separating the electrically conducting connection between the respective load (M) and at least one of the terminals (3) are in operational connection with the emergency off-switch (7).

5. Boat according to claim 4, **characterised in that** the separating element (10) is provided with a time delay unit.

6. Boat according to any one of the preceding claims, **characterised in that** an electrical load (8) is connected to the terminals (3) of the electrical storage device (1), wherein the load (8) is provided with an own control unit (9), and that the control unit (9) of the load (8) is in operational connection with the emergency off-switch (7).

7. Boat according to any one of the preceding claims, **characterised in that** an electrical load (8) is connected to the terminals (3) of the electrical storage device (1), wherein the load (8) is provided with an own control unit (9) which is connected to a voltage supply (6), and that the voltage supply (6) of the control unit (9) is in operational connection with the emergency off-switch (7).

8. Boat according to any one of the preceding claims, **characterised in that** the emergency off-switch (7) is provided in the form of a magnetic switch.

9. Boat according to any one of the preceding claims, **characterised in that** a plurality of sensors (17a, 17b) are provided for detection of the operation of the emergency off-switch (7).

10. Method for separating an electrical load (8) from an electrical storage device (1) in a boat according to claim 1, wherein the electrical storage device (1) has at least one storage element (2) and a positive and a negative terminal (3) and wherein the terminals (3) are in electrically conducting connection with the storage element (2) and the electrical load (8) is connected to the terminals (3), **characterised in that** the electrically conducting connection between the storage element (2) and at least one of the terminals (3) is interrupted by means of an emergency off-switch (7).

11. Method according to claim 10, **characterised in that** a separating means (4) is provided for separating the electrically conducting connection between at least one of the terminals (3) and the storage element (2), that the separating means (4) is electrically operated and that the supply voltage for the electrical operation of the separating means (4) is switched, in particular interrupted, by means of the emergency off-switch (7).

12. Method according to claim 10 or 11, **characterised in that** one or more electrical loads (8) are connected to the terminals (3) of the electrical storage device (1) and that upon operation of the emergency off-switch (7), the electrical connection between at least one of the loads (8) and at least one of the terminals (3) is interrupted.

13. Method according to any one of claims 10 to 12, **characterised in that** first the electrical connection between at least one of the loads (8) and at least one of the terminals (3) is interrupted and subsequently the electrically conducting connection between the storage element (2) and at least one of the terminals (3) is interrupted.

14. Method according to any one of claims 12 or 13, **characterised in that** one load (8) and/or the separating means (4) are connected with a control unit (9, 23), wherein the control unit(s) (9, 23) are connected to a voltage supply (6), and that upon operating of the emergency off-switch (7) first the electrically conducting connection between the storage element (2) and at least one of the terminals (3) and optionally the electrical connection between at least one of the loads (8) and at least one of the terminals (3) are interrupted and subsequently the control unit(s) (9, 23) are separated from the voltage supply (6).

15. Method according to any one of claims 10 to 14, **characterised in that** the emergency off-switch (7) has a magnet (20) with a variable position and a sensor (21) for detecting the magnetic field of the magnet (20), and that a motor control (19) is provided which links a certain position of the magnet (20) with a certain set value for the control of the motor and which upon removal of the magnet (20) from its position interrupts the electrically conducting connection between the storage element (2) and at least one of the terminals (3).

## Revendications

1. Navire avec un entraînement électrique (M) et un accumulateur (1) électrique, qui présente au moins un élément d'accumulateur (2) et un pôle (3) positif et un pôle négatif, dans lequel les pôles (3) sont reliés avec une liaison d'acheminement de courant à l'élément d'accumulateur (2) et dans lequel un moyen de coupure (4) est prévu pour couper la liaison avec acheminement de courant entre au moins un des pôles (3) et l'élément d'accumulateur (2), **caractérisé en ce qu'**un disjoncteur d'arrêt d'urgence (7) pouvant être activé directement par l'utilisateur du navire est prévu, lequel coopère avec le moyen de coupure (4).

2. Navire selon la revendication 1, **caractérisé en ce que** l'accumulateur (1) électrique est réalisé sous la forme d'une source de tension haute avec une tension de borne supérieure à 60 volts, supérieure à 100 volts ou supérieure à 200 volts.

3. Navire selon l'une quelconque des revendications précédentes, **caractérisé en ce que** le navire est pourvu d'un entraînement hors-bord, et que le disjoncteur d'arrêt d'urgence (7) est prévu au niveau du boîtier de l'entraînement hors-bord ou de la barre de l'entraînement hors-bord.

4. Navire selon l'une quelconque des revendications précédentes, **caractérisé en ce qu'**un ou plusieurs consommateurs (8) électriques sont raccordés aux pôles (3) de l'accumulateur (1) électrique, et que sont prévus pour un ou plusieurs des consommateurs électriques (M) des éléments de coupure (10) servant à couper la liaison avec acheminement de courant entre le consommateur (M) respectif et au moins un des pôles (3), dans lequel le ou les éléments de coupure (10) servant à couper la liaison avec acheminement de courant entre le consommateur (M) respectif et au moins un des pôles (3) coopèrent avec le disjoncteur d'arrêt d'urgence (7).

5. Navire selon la revendication 4, **caractérisé en ce que** l'élément de coupure (10) est pourvu d'une unité de temporisation.

6. Navire selon l'une quelconque des revendications précédentes, **caractérisé en ce qu'**un consommateur (8) électrique est raccordé aux pôles (3) de l'accumulateur (1) électrique, dans lequel le consommateur (8) dispose d'une unité de commande (9) propre, et que l'unité de commande (9) du consommateur (8) coopère avec le disjoncteur d'arrêt d'urgence (7).

7. Navire selon l'une quelconque des revendications précédentes, **caractérisé en ce qu'**un consommateur (8) électrique est raccordé aux pôles (3) de l'accumulateur (1) électrique, dans lequel le consommateur (8) dispose d'une unité de commande (9) propre, qui est raccordée à l'alimentation en tension (6), et que l'alimentation en tension (6) de l'unité de commande (9) coopère avec le disjoncteur d'arrêt d'urgence (7).

8. Navire selon l'une quelconque des revendications précédentes, **caractérisé en ce que** le disjoncteur d'arrêt d'urgence (7) est réalisé sous la forme d'un commutateur magnétique.

9. Navire selon l'une quelconque des revendications précédentes, **caractérisé en ce que** plusieurs capteurs (17a, 17b) sont prévus pour identifier l'actionnement du disjoncteur d'arrêt d'urgence (7).

10. Procédé servant à couper un consommateur (8) électrique d'un accumulateur (1) électrique dans un navire selon la revendication 1,
dans lequel l'accumulateur (1) électrique présente au moins un élément d'accumulateur (2) et un pôle (3) positif et un pôle négatif et dans lequel les pôles (3) sont reliés avec acheminement de courant à l'élément d'accumulateur (2) et le consommateur (8) électrique est raccordé aux pôles (3), **caractérisé en ce que** la liaison avec acheminement de courant entre l'élément accumulateur (2) et au moins un des pôles (3) est interrompue au moyen d'un disjoncteur d'arrêt d'urgence (7).

11. Procédé selon la revendication 10, **caractérisé en ce qu'**est prévu un moyen de coupure (4) servant à couper la liaison avec acheminement de courant entre au moins un des pôles (3) et l'élément accumulateur (2), que le moyen de coupure (4) est actionné de manière électrique, et que la tension d'alimentation pour l'actionnement électrique du moyen de coupure (4) est activée, en particulier interrompue, par le disjoncteur d'arrêt d'urgence (7).

12. Procédé selon la revendication 10 ou 11, **caractérisé en ce qu'**un ou plusieurs consommateurs (8) électriques sont raccordés aux pôles (3) de l'accumulateur (1) électrique, et que lors de l'actionnement du disjoncteur d'arrêt d'urgence (7), la liaison électrique entre au moins un des consommateurs (8) et au moins un des pôles (3) est interrompue.

13. Procédé selon l'une quelconque des revendications 10 à 12, **caractérisé en ce que** dans un premier temps la liaison électrique entre au moins un des consommateurs (8) et au moins un des pôles (3) est interrompue, et immédiatement après la liaison avec acheminement de courant entre l'élément accumulateur (2) et au moins un des pôles (3) est interrompue.

14. Procédé selon l'une quelconque des revendications 12 ou 13, **caractérisé en ce qu'**un consommateur (8) et/ou le moyen de coupure (4) sont reliés à une unité de commande (9, 23), dans lequel l'unité de commande/les unités de commande (9, 23) sont raccordées à une alimentation en tension (6), et que lors de l'actionnement du disjoncteur d'arrêt d'urgence (7), dans un premier temps la liaison avec acheminement de courant entre l'élément d'accumulateur (2) et au moins un des pôles (3) et éventuellement la liaison électrique entre au moins un des consommateurs (8) et au moins un des pôles (3) est interrompue, puis l'unité de commande/les unités de commande (9, 23) sont coupées de l'alimentation en courant (6).

15. Procédé selon l'une quelconque des revendications 10 à 14, **caractérisé en ce que** le disjoncteur d'arrêt d'urgence (7) présente un aimant (20) à position variable et un capteur (21) servant à détecter le champ magnétique de l'aimant (20), et qu'une commande de moteur (19) est prévue, laquelle combine une position définie de l'aimant (20) et une valeur théorique définie pour la commande du moteur et laquelle interrompt, lors du retrait de l'aimant (20) de sa position, la liaison avec acheminement de courant entre l'élément accumulateur (2) et au moins un des pôles (3).
